# DEMANDE DE BREVET EUROPEEN

(11) **EP 2 693 111 A1**
(43) Date de publication de la demande: **05.02.2014**
(21) Numéro de dépôt: 13178365.6
(22) Date de dépôt: 29.07.2013
(51) Int. Cl.: F21S 8/10, G02B 3/00, G02B 3/12, B29C 45/16, F21V 5/04

(54) **Dispositif optique complexe pour dispositif d'éclairage et/ou de signalisation notamment de véhicule automobile**

(30) Priorité: 02.08.2012 FR 1202174
(71) Demandeur: VALEO VISION, 93012 Bobigny Cedex (FR)
(72) Inventeur: Meyrenaud, Jean-Luc, 93190 LIVRY GARGAN (FR); Hugol, Maxime, 95220 Herblay (FR)

(57) **Abrégé**

L'invention est relative à un dispositif optique complexe, notamment pour dispositif lumineux de véhicule automobile, comportant une pièce optique transparente élémentaire d'entrée (1) et une pièce optique transparente élémentaire de sortie (2) positionnées relativement de sorte à se suivre le long d'un chemin optique, ainsi qu'au moins une pièce optique transparente élémentaire intermédiaire (3) située entre la pièce optique transparente élémentaire d'entrée (1) et la pièce optique transparente élémentaire de sortie (2), l'une de ces pièce optiques transparentes élémentaires (1, 2, 3) étant en un matériau différent du matériau d'au moins une autre de ces pièces optiques (1, 2, 3).

## Description

La présente invention est relative notamment à un dispositif optique. Une application préférée concerne l'industrie automobile pour la réalisation de dispositifs d'éclairage ce qui peut inclure des dispositifs de signalisation, notamment de projecteur de véhicule.

Dans le domaine automobile, on connait des modules d'éclairage ou projecteurs, parmi lesquels on trouve traditionnellement essentiellement :
- des feux de croisement, ou codes, d'intensité plus forte et de portée sur la route avoisinant les 70 mètres, qui sont utilisés essentiellement la nuit et dont la répartition du faisceau lumineux est telle qu'elle permet de ne pas éblouir le conducteur d'un véhicule croisé. Typiquement, ce faisceau présente une coupure en partie supérieure avec une portion horizontale, préférentiellement environ 0,57 degrés en dessous de l'horizon, afin de ne pas éclairer la zone dans laquelle devrait se trouver le conducteur d'un véhicule arrivant en sens inverse,
- des feux de route longue portée, dont la zone de portée sur la route peut atteindre 600 mètres, et qui doivent être éteints lorsque l'on croise ou suit un autre véhicule afin de ne pas éblouir son conducteur,
- des feux antibrouillard.

Dans certaines applications, ces dispositifs d'éclairage comprennent des lentilles adaptées et notamment de lentilles par lesquelles un faisceau de sortie peut être émis en direction de la zone de l'espace à illuminer, suivant une direction privilégiée constituant l'axe optique du dispositif. Dans l'art antérieur, les lentilles utilisées pour focaliser un faisceau lumineux sont en général installées entre la source de lumière, par exemple une ampoule au Xénon ou une diode électroluminescente (LED), et une glace de fermeture du projecteur qui reçoit cet ensemble. Ces lentilles présentent une face d'entrée et une face de sortie. Dans certaines réalisations, ces lentilles sont bombées et de grande épaisseur. L'épaisseur d'une telle pièce étant importante en vue d'atteindre certaines propriétés de focalisation en fonction de l'agencement du projecteur, de la distance qui sépare la source lumineuse de la lentille, etc... Elles peuvent être fabriquées par moulage de forte épaisseur mais les temps de cycles sont très longs.

Dans d'autres cas existant, la lentille d'une matière donnée est constituée d'un empilement de deux couches superposées. La fabrication de cette lentille selon ce type d'art antérieur intervient souvent de la manière suivante. On moule une partie de base, par injection. Le respect d'un temps de refroidissement est nécessaire avant l'étape suivante. Ce temps de refroidissement est d'autant plus important que l'épaisseur de cette partie de base est grande. Cette étape suivante comprend l'installation d'un deuxième moule par-dessus la partie de base de manière à mouler une couche supplémentaire par-dessus la partie de base. On comprend ainsi que la première couche est délimitée par le moule, la partie de base et le support.

On obtient alors une lentille épaisse en deux phases de moulage, composée de deux lentilles élémentaires surmoulées. Néanmoins, les propriétés de la lentille complexe obtenue sont limitées car il n'est pas possible d'augmenter fortement l'épaisseur de tels surmoulages. Les variations de conception de lentilles suivant les besoins de l'application sont en outre bien faibles.

L'invention permet de résoudre au moins en partie les inconvénients des techniques actuelles.

Un aspect de l'invention est relatif à un dispositif optique complexe, notamment pour dispositif lumineux de véhicule automobile, comportant une pièce optique transparente élémentaire d'entrée et une pièce optique transparente élémentaire de sortie, préférentiellement positionnées relativement de sorte à se suivre avantageusement le long d'un chemin optique d'un faisceau lumineux apte à entrer dans le dispositif par un dioptre d'entrée formé par une face de la pièce optique transparente élémentaire d'entrée. Ce dispositif optique complexe comporte au moins une pièce optique transparente élémentaire intermédiaire située entre la pièce optique transparente élémentaire d'entrée et la pièce optique transparente élémentaire de sortie suivant le chemin optique, l'une de ces pièce optiques transparentes élémentaires étant en un matériau différent du matériau d'au moins une autre de ces pièces optiques transparentes élémentaires.

Autrement dit, un aspect de l'invention est qu'il existe au moins une transition entre deux pièces optiques transparentes élémentaires de matériaux différents dans le dispositif optique.

Alors que les dispositifs optiques étaient jusqu'à présent contraints par l'épaisseur maximum permise par un surmoulage d'une partie de lentille sur une autre, l'invention offre une grande latitude de variation de choix de conception. D'une part, la présence d'une ou plusieurs couches intermédiaires autorise un empilement de plus grande taille ou des fabrications de même taille qu'auparavant mais avec des épaisseurs de lentilles élémentaires plus réduites. D'autre part, la multiplication des matériaux employés pour les lentilles offre une grande flexibilité de réalisation. On peut par exemple sélectionner un premier matériau pour la pièce optique transparente élémentaire d'entrée suivant des contraintes de résistance thermique alors que d'autres pièces optiques transparentes élémentaires pourront être optimisées sur le plan de l'indice de transmission ou de réfraction.

Suivant un mode de réalisation, chaque couche intermédiaire est convergente, à savoir qu'elle se comporte vis-à-vis des rayons lumineux comme une lentille convergente. Par exemple, l'épaisseur de la lentille est plus forte en son milieu qu'à ses bords, cette épaisseur diminuant en évoluant de son milieu vers ses bords.

Suivant un mode de réalisation, les matériaux des couches de la lentille sont des matériaux solides, notamment avec un module de Young supérieur à 1000 Méga Pascals.

Suivant un mode de réalisation préféré, les au moins deux matériaux différents présentent des indices de réfraction différents.

Suivant une possibilité, la pièce optique transparente élémentaire d'entrée est en un matériau plus résistant à la chaleur que le au moins deuxième matériau.

Selon une réalisation de l'invention, la pièce optique transparente élémentaire d'entrée est dans un matériau résistant thermiquement, par exemple résistant à au moins 60°C, voire au moins 110°C. On peut par exemple utiliser du polycarbonate. Le polycarbonate a une bonne tenue en température puisqu'il résiste à 120°C. C'est-à-dire que jusqu'à 120°C la pièce optique transparente élémentaire conservera son pourtour tel qu'il a été conçu. Ainsi le profil des dioptres de cette la pièce optique transparente élémentaire d'entrée restera constant. On peut ainsi utiliser des sources lumineuses plus puissantes.

On donne ci-après d'autres options, toutes les options de l'invention pouvant être mises en oeuvre indépendamment ou en se combinant :
- elle comporte une pièce optique transparente élémentaire intermédiaire unique.
- au moins une pièce optique transparente élémentaire intermédiaire est en polyméthacrylate de méthyle ou en silicone. Le polyméthacrylate de méthyle présente un bon coefficient de transmission.
- la pièce optique transparente élémentaire de sortie est en polycarbonate.
- la pièce optique transparente élémentaire de sortie et/ou la pièce optique transparente élémentaire d'entrée est en polyméthacrylate de méthyle. On notera d'une manière générale que ce matériau a un bon indice de transmission et une bonne résistance aux rayures.
- les pièces optiques transparentes élémentaires sont disposées successivement, chaque pièce optique transparente élémentaire étant préférentiellement en contact avec la ou les pièces optiques transparentes élémentaires qui lui sont contiguës.
- au moins deux pièces optiques transparentes élémentaires successives présentent un contact surfacique d'au moins 50% de leurs faces en vis-à-vis. Le dispositif optique peut être utilisé de sorte que ces faces en vis-à-vis correspondent au chemin optique des rayons du faisceau lumineux.
- au moins une pièce optique transparente élémentaire intermédiaire et la pièce optique transparente élémentaire de sortie sont obtenues par surmoulage au-dessus de la pièce optique transparente élémentaire d'entrée.
- elle comprend des moyens mécaniques d'assemblage des pièces optiques transparentes élémentaires.
- les moyens mécaniques d'assemblage sont configurés pour solidariser la pièce optique transparente élémentaire d'entrée et la pièce optique transparente élémentaire de sortie, la au moins une pièce optique transparente élémentaire intermédiaire étant prise en étau entre la pièce optique transparente élémentaire d'entrée et la pièce optique transparente élémentaire de sortie.
- les pièces optiques transparentes élémentaires sont des lentilles optiques élémentaires.
- au moins deux lentilles successives comportent pour l'une, une face de sortie convexe, pour l'autre une face d'entrée concave, la face d'entrée et la face de sortie étant complémentaires pour réaliser un contact surfacique suivant le chemin optique.
- les pièces optiques transparentes élémentaires sont positionnées relativement de sorte à se suivre le long d'un chemin optique d'un faisceau lumineux apte à entrer dans le dispositif par un dioptre d'entrée.

L'application privilégiée par l'invention est la réalisation de lentilles épaisses.

L'invention est aussi relative à un dispositif lumineux de véhicule automobile, notamment pour l'éclairage et/ou de signalisation comportant au moins une source lumineuse et au moins un dispositif selon l'invention.

L'ensemble du dispositif forme préférentiellement module optique intégrable dans un projecteur avant de véhicule automobile, encore appelé phare de véhicule automobile.

L'invention a aussi pour objet un module optique de projecteur de véhicule automobile comprenant un dispositif optique complexe selon l'invention. Selon une réalisation de ce module optique, le module optique est apte à générer un faisceau d'éclairage de la route.

Un autre objet de l'invention est un projecteur de véhicule automobile comprenant un module selon l'invention.

Un autre objet de l'invention est un véhicule équipé d'au moins un dispositif de l'invention tel qu'indiqué ci-dessus.

A noter que les pièces optiques transparentes élémentaires selon la présente invention ne sont pas nécessairement des lentilles, mais peuvent être d'autres pièces optiques transparentes destinées à transmettre un faisceau lumineux, comme des guides de lumière. Il peut s'agir notamment de guides de lumière de dispositif lumineux de véhicule automobile, notamment des dispositifs d'éclairage de la route, de signalisation ou d'éclairage de l'habitacle du véhicule.

D'autres caractéristiques, buts et avantages de la présente invention apparaitront à la lecture de la description détaillée qui suit, et en regard des dessins annexés donnés à titre d'exemples non limitatifs et sur lesquels :
La figure 1 présente en coupe, suivant un plan contenant l'axe optique, la section d'un dispositif de l'invention dans un mode de réalisation.
La figure 2 montre un autre exemple avec un profil différent.
La figure 3 schématise un chemin optique au travers diverses lentilles du dispositif optique complexe.
La figure 4 montre deux exemples de succession de lentilles.
La figure 5 présente deux autres exemples.
Les figures 6 et 7 sont des courbes isolux schématiques illustrant les possibilités de variations optiques offertes par l'invention selon la sélection du nombre de lentilles dans le dispositif optique.

L'adjectif « complexe » est ici utilisé pour signifier que le dispositif optique est pourvu de plusieurs pièces optiques transparentes élémentaires. On donne ci-après des exemples de réalisation indicatifs, en référence aux figures dans lesquels les pièces optiques transparentes élémentaires sont des lentilles, ce choix n'étant pas limitatif. Les modes de réalisation parlant plus particulièrement d'un type de pièces optiques transparentes élémentaires tels des lentilles sont généralisables à tous types de pièces optiques transparentes élémentaires.

Le terme « lentille épaisse » s'entend de son acception courante à savoir d'une lentille dont l'épaisseur n'est pas négligeable devant le rayon de courbure de ses faces, au contraire d'une lentille mince.

Tous types de faisceaux peuvent être formés grâce à l'invention, dont les différents feux normalisés indiqués au début de la présente description.

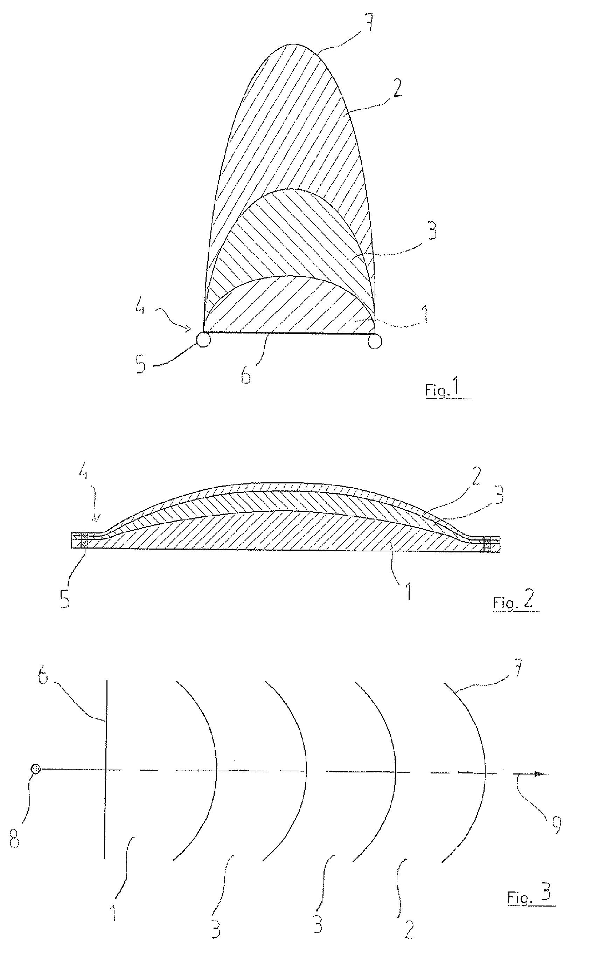

La figure 1 donne un premier exemple de réalisation de l'invention avec une pluralité de lentilles, d'une manière générale transparentes, et comprenant :
- une lentille d'entrée 1 dont une face, dite face d'entrée, forme le dioptre d'entrée 6 du dispositif optique complet ;
- une lentille de sortie 2 dont une face, dite face de sortie, forme le dioptre de sortie 7 du dispositif optique complet ;
- une lentille intermédiaire 3 positionnée entre les deux lentilles 1, 2 précitées. Plus de trois lentilles pourraient être formées sans sortir du cadre de la présente invention. Le nombre de lentilles intermédiaire 3 n'est pas limité.

Les lentilles 1, 3, 2 se suivent suivant un chemin optique suivi par les rayons lumineux issus d'une source 8 schématisée en figure 3. La source lumineuse 8 peut être constituée d'une ou plusieurs sources et plus particulièrement d'une ou plusieurs diodes électroluminescentes (LED). Cette ou ces LED peuvent comprendre un ou plusieurs éléments photoémetteurs (les LED à un seul élément photoémetteur et les LED à plusieurs éléments photoémetteurs sont parfois dénommées en anglais respectivement « monochip » et « multichip »). Dans le cas d'une pluralité de diodes électroluminescentes (LED), il est avantageux de les positionner de manière à ce que la surface émettrice de leur(s) élément(s) photoémetteur(s) soit dans un même plan. Dans le cas de l'exemple représenté, la source lumineuse 8 est constituée d'une seule LED.

Typiquement, le chemin optique correspond à un parcours de la lumière au travers des lentilles jusqu'à sortir, par le dioptre de sortie 7, avec une direction moyenne représentée par l'axe optique 9 également visible en figure 3.

Le nombre, la forme, les dimensions et la nature de chaque lentille peuvent être, grâce à l'invention, librement adaptés aux objectifs de transformation optique visés. On peut notamment réaliser un dispositif optique assimilable à une lentille épaisse de grande profondeur, sans pour autant mettre en oeuvre des techniques de fabrication spécialement dédiées à de telles lentilles. Par ailleurs, on peut, grâce à l'invention, modifier la focale d'une lentille à l'autre.

En revenant à la figure 1, on note que les lentilles 2 et 3 ont préférentiellement une conformation concave / convexe : une de leurs faces, dite face d'entrée, est concave ; l'autre face, dite face de sortie, est convexe. La première lentille 1 est plan convexe : une de ses faces, dite face d'entrée, est plane ; l'autre face, dite face de sortie, est convexe. On configure le dispositif avantageusement de sorte que les lentilles 1, 3, 2 se succèdent sans espace intercalaire. Les formes concaves et convexes des faces sont donc prévues en conséquence. L'absence d'espace intercalaire peut être totale, aux tolérances de fabrication près comme dans la situation de la figure 1. Néanmoins, le contact surfacique intime des faces des lentilles successives peut n'intervenir que sur une zone, préférentiellement continue, plus limitée. Cette zone peut couvrir au moins en partie, avantageusement plus de 50% en surface, et préférentiellement plus de 80%, de la zone de passage des rayons lumineux c'est-à-dire le chemin du faisceau issu de la source 8.

Au moins certaines des lentilles qui composent le dispositif peuvent être obtenues par surmoulage. Ainsi comme on peut l'observer en figure 1, on obtient une lentille globale épaisse formée par le surmoulage de plusieurs couches élémentaires, chaque couche correspondant à une lentille élémentaire selon l'invention.

Néanmoins, il est aussi possible d'employer des moyens mécaniques. L'assemblage mécanique des lentilles s'opère à titre préféré par leur périphérie. Dans le cas d'une lentille plan convexe comme la lentille 1 suivie de lentilles concaves convexes comme les lentilles 3 et 2, leurs bordures fournissent une zone de jonction commode pour procéder à la solidarisation. Ainsi comme on peut l'observer en figure 1, on obtient une lentille globale épaisse formée par l'assemblage de plusieurs lentilles élémentaires successives en contact.

Dans l'exemple de la figure 1, on a schématisé des moyens d'assemblage par une fixation 5 du type bouterollage. La figure 2 montre un assemblage par boulonnage au travers d'un trou traversant une portion de bordure sensiblement plane de chaque lentille.

L'expression « assemblage mécanique » n'est pas limitée aux exemples d'assemblage expressément présentés et s'étend à toute technique de solidarisation de pièces mettent en oeuvre une retenue mécanique, par organes de fixation tels que vis, clous, clips, sertissage, colle, soudure ou autre, en opposition aux techniques de surmoulage.

On notera que l'assemblage mécanique n'implique pas nécessairement que chaque lentille coopère directement avec des moyens d'assemblage. En effet, un mode de réalisation assure une prise en sandwich des lentilles intermédiaires 3 lors de la fixation relative des lentilles d'extrémité, à savoir les lentilles 1 et 2.

Optionnellement, l'assemblage est configuré pour assurer l'étanchéité à l'air des lentilles si bien qu'on évite tout risque de formation d'une pellicule d'air intercalaire entre certaines lentilles. On peut, par exemple, mettre en place des joints minces en périphérie de l'assemblage. Un film liquide peut aussi être employé pour recouvrir au moins une partie des faces de lentilles amenées à être au contact avec d'autres lentilles.

On peut avec l'invention varier le matériau des couches. Toutes combinaisons entrent dans le cadre de l'invention. On notera cependant les choix préférentiels suivants :
- le matériau de la lentille d'entrée est avantageusement suffisamment résistant à la chaleur, en particulier pour offrir la résistance thermique appropriée à la chaleur dissipée par la source ; des matériaux du type polycarbonate donnent satisfaction d'une manière générale ;
- les lentilles suivant la lentille d'entrée sont avantageusement choisies pour optimiser le coût et l'indice de transmission.

Parmi les matériaux possibles, on compte : le polycarbonate (PC), le polyméthacrylate de méthyle (PMMA), le polystyrène, le polyamide et plus généralement tous polymères transparents ainsi que tout matériau minéral transparent dont le verre.

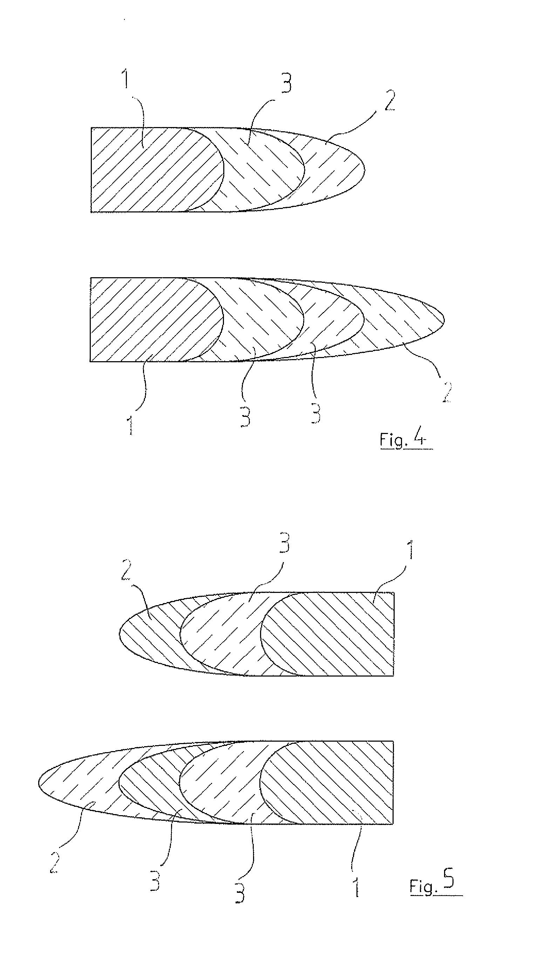

Suivant le mode de réalisation visible à la première vue de la figure 4, trois lentilles s'enchainent le long du chemin optique. La lentille d'entrée 1 est dans un premier matériau, avantageusement du polycarbonate. Les lentilles suivantes, 3 et 2, sont dans un autre matériau, avantageusement du PMMA. On tire ainsi profit de la résistance thermique du polycarbonate tout en préservant le PMMA comme matériau privilégié pour les autres couches en raison de ses bonnes qualités optiques en transmission.

Dans le cas de la deuxième vue de la figure 4, une couche intermédiaire 3 supplémentaire a été ajoutée. Elle est encore avantageusement en PMMA. Cet ajout révèle que l'invention permet d'ajuster l'épaisseur du dispositif optique par simple ajout de couches de lentilles.

A la première vue de la figure 5, on a schématisé une variante de la première vue de la figure 4, dans laquelle 3 lentilles sont encore présentes mais avec des matériaux répartis différemment : la lentille d'entrée 1 est dans un premier matériau, qui peut encore être du polycarbonate. La lentille intermédiaire qui la suit est en un deuxième matériau, par exemple du PMMA. Enfin, la lentille de sortie 2 est faite dans le premier matériau si bien que la lentille intermédiaire 3 est encadrée par deux lentilles du même matériau.

La deuxième vue de la figure 5 présente une autre configuration avantageuse dans laquelle 4 lentilles se succèdent avec une alternance de couches faite du premier matériau et du deuxième matériau.

Une autre possibilité consiste à employer plus de deux matériaux pour les lentilles. Un exemple est la formation de la lentille d'entrée 1 en un premier matériau (tel du polycarbonate ou autre matériau résistant à la chaleur), de la lentille de sortie en un deuxième matériau (tel du PMMA ou autre matériau ayant un bon indice de transmission) et de la ou les lentilles intermédiaire en un troisième matériau (tel du silicone ou autre matériau ayant un bon indice de réfraction).

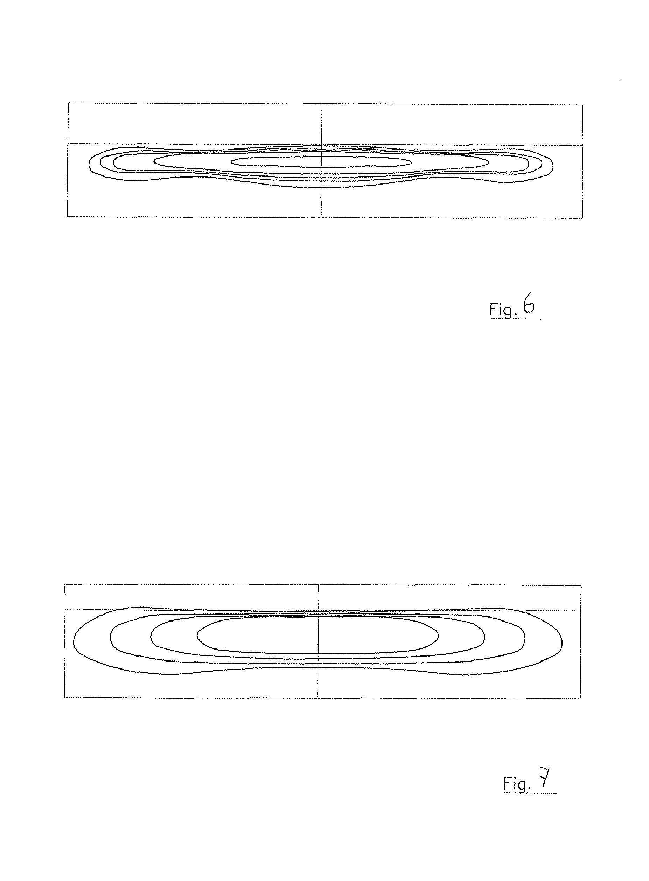

La figure 7 illustre des courbes isolux obtenues pour une lentille monobloc et mono-matière en polycarbonate. La lumière du faisceau présente une certaine répartition spatiale.

En figure 6, les courbes isolux correspondent à un faisceau obtenu avec une lentille correspondant à celle de la deuxième vue de la figure 4, avec quatre lentilles, successivement en polycarbonate (lentille d'entrée 1) et en PMMA (lentille 2 et lentilles 3). Une plus grande focale est obtenue grâce à cette succession et le faisceau est plus ramassé, permettant d'obtenir une autre répartition de lumière.

L'invention n'est pas limitée aux modes de réalisation précédemment décrits mais s'étend à tous modes de réalisation conformes à son esprit.

### REFERENCES

- 1.: Lentille d'entrée
- 2.: Lentille de sortie
- 3.: Lentille intermédiaire
- 4.: Périphérie
- 5.: Fixation
- 6.: Dioptre d'entrée
- 7.: Dioptre de sortie
- 8.: Source lumineuse
- 9.: Axe optique

## Revendications

1. Dispositif optique complexe, notamment pour dispositif lumineux de véhicule automobile, comportant une pièce optique transparente élémentaire d'entrée (1) et une pièce optique transparente élémentaire de sortie (2) positionnées relativement de sorte à se suivre le long d'un chemin optique d'un faisceau lumineux apte à entrer dans le dispositif par un dioptre d'entrée (6) formé par une face de la pièce optique transparente élémentaire d'entrée (1),
**caractérisé en ce qu'**il comporte au moins une pièce optique transparente élémentaire intermédiaire (3) située entre la pièce optique transparente élémentaire d'entrée (1) et la pièce optique transparente élémentaire de sortie (2) suivant le chemin optique, l'une de ces pièce optiques transparentes élémentaires (1, 2, 3) étant en un matériau différent du matériau d'au moins une autre de ces pièces optiques transparentes élémentaires (1, 2, 3).

2. Dispositif selon la revendication précédente, dans lequel les deux matériaux différents présentent des indices de réfraction différents.

3. Dispositif selon l'une des revendications précédentes, dans lequel la pièce optique transparente élémentaire d'entrée (1) est en un matériau plus résistant à la chaleur que le deuxième matériau.

4. Dispositif selon l'une des revendications précédentes, dans lequel la pièce optique transparente d'entrée est résistante à une chaleur d'au moins 60°C, et de préférence d'au moins 110°C.

5. Dispositif selon l'une des revendications précédentes, dans lequel la pièce optique transparente élémentaire d'entrée (1) est en polycarbonate.

6. Dispositif selon l'une des revendications 1 à 4, dans lequel la pièce optique transparente élémentaire d'entrée est en polyméthacrylate de méthyle.

7. Dispositif selon l'une des revendications précédentes, dans lequel au moins une pièce optique transparente élémentaire intermédiaire est en polyméthacrylate de méthyle ou en silicone.

8. Dispositif selon l'une des revendications précédentes, dans lequel la pièce optique transparente élémentaire de sortie (2) est en polycarbonate.

9. Dispositif selon l'une des revendications 1 à 7, dans lequel la pièce optique transparente élémentaire de sortie (2) est en polyméthacrylate de méthyle.

10. Dispositif selon l'une des revendications précédentes, dans lequel la au moins une pièce optique transparente élémentaire intermédiaire (3) et la pièce optique transparente élémentaire de sortie (2) sont obtenues par surmoulage au-dessus de la pièce optique transparente élémentaire d'entrée (1).

11. Dispositif selon l'une des revendications précédentes, dans lequel les pièces optiques transparentes élémentaires sont disposées successivement, chaque pièce optique transparente élémentaire étant en contact de la ou des pièces optiques transparentes élémentaires qui lui sont contiguës.

12. Dispositif selon l'une des revendications précédentes, dans lequel les pièces optiques transparentes élémentaires sont des lentilles optiques élémentaires.

13. Dispositif selon la revendication précédente, dans lequel au moins deux lentilles successives (1 et 3, ou 3 et 2) comportent pour l'une, une face de sortie convexe, pour l'autre une face d'entrée concave, la face d'entrée et la face de sortie étant complémentaires pour réaliser un contact surfacique suivant le chemin optique.

14. Module optique de projecteur de véhicule automobile, notamment pour générer un faisceau d'éclairage de la route, comprenant un dispositif selon l'une des revendications précédentes.

15. Projecteur de véhicule automobile comprenant un module selon la revendication 14.
